# EUROPÄISCHE PATENTSCHRIFT

(11) **EP 0 980 974 B1**
(45) Veröffentlichungstag und Bekanntmachung des Hinweises auf die Patenterteilung: **03.01.2001**
(21) Anmeldenummer: 99114499.9
(22) Anmeldetag: 23.07.1999
(51) Int. Cl.: F02N 11/00

(54) **Rückwärtsfahreinrichtung für ein Motorrad**
Reverse-drive device for motorcycle
Dispositif d'entraînement en sens inverse pour motocyclette

(30) Priorität: 17.08.1998 DE 19837121
(43) Veröffentlichungstag der Anmeldung: 23.02.2000
(73) Patentinhaber: Bayerische Motoren Werke Aktiengesellschaft, 80809 München (DE)
(72) Erfinder: Maier, Josef, 85253 Erdweg (DE); Schäffler, August, 85391 Allershausen (DE); Hubertz, Mike, 80999 München (DE)

(56) Entgegenhaltungen:
- US-A- 4 827 148
- US-A- 4 870 874
- US-A- 4 923 028

## Beschreibung

Die Erfindung betrifft ein Motorrad mit einer Rückwärtsfahreinrichtung nach dem Oberbegriff des Hauptanspruchs.

Das Patent US 4,827,148 beschreibt ein solches Motorrad, bei dem das Betätigungsorgan zum Einlegen des Rückwärtsfahrantriebs, ein Handhebel, über ein Seilzugsystem mit einer Wähleinrichtung für eine Rückwärtsfahreinrichtung verbunden ist. Die Wähleinrichtung für die Rückwärtsfahreinrichtung verbindet entweder die Antriebseinrichtung oder die Rückwärtsfahreinrichtung mit der Kraftübertragungseinrichtung des Motorrads.

Dabei besteht die Antriebseinrichtung mindestens aus einem Verbrennungsmotor und einem von diesem angetriebenen Getriebe mit mehreren Schaltstufen für Vorwärtsfahrt. Die Rückwärtsfahreinrichtung verwendet als Antriebsmotor einen Elektromotor, der für Rückwärtsfahrt die Kraftübertragungseinrichtung antreibt. Der selbe Elektromotor wird auch als Startermotor einer Starteinrichtung für den Verbrennungsmotor verwendet. Die Kraftübertragungseinrichtung überträgt die Antriebskraft vom Getriebe auf ein Hinterrad.

Desmodromische Seilzüge zur Verbindung eines Handhebels mit einer Wähleinrichtung zum Einlegen des Rückwärtsgangs sind sehr teuer. Es wird ein großes Bauvolumen beansprucht und es ist Spiel in den Bowdenzügen erforderlich. Dennoch ist eine exakte Verlegung der Bowdenzüge notwendig, die auch von Korrosion betroffen werden können. Die Montage der Bowdenzüge am Fließband ist unsicher und im Betrieb längen sich diese entsprechend der Temperatur.

Deshalb ist es Aufgabe der Erfindung, eine Wähleinrichtung für eine Rückwärtsfahreinrichtung bereitzustellen, die preiswert herstellbar ist, bei gutem Toleranzausgleich und geringem Gewicht auch eine problemlose Montage am Fließband ermöglicht. Außerdem sollen hohe Betätigungskräfte möglich sein.

Die Aufgabe wird erfindungsgemäß mit dem kennzeichnenden Merkmal des Anspruchs 1 gelöst. Weitere Ausgestaltungen der Erfindung ergeben sich aus den Unteransprüchen.

Nach der Erfindung ist das Betätigungsorgan der Wähleinrichtung, als Handhebel ausgebildet, an einem Gehäuse für das Getriebe angebracht. Das hat den Vorteil, daß keine Seilzüge zum Handhebel hin notwendig sind.

Bei einer vorteilhaften Ausführung der Erfindung ist das Betätigungsorgan am Ende einer im Gehäuse des Getriebes drehbar gelagerten Welle der Wähleinrichtung angebracht. Eine Welle ist einfach aus dem Gehäuse des Getriebes herauszuführen, wobei es möglich ist, die drehbare Lagerung zuverlässig abzudichten.

Bei einer weiteren vorteilhaften Ausführung der Erfindung ist das Betätigungsorgan am Ende einer Betätigungswelle angebracht, die in einem Haltebock drehbar gelagert ist, der mit dem Gehäuse des Getriebes fest verbunden ist. Zusätzlich ist die Betätigungswelle von der Welle der Wähleinrichtung abnehmbar, außerhalb des Gehäuses des Getriebes mit dieser drehfest verbunden.

Dadurch kann das Betätigungsorgan vorteilhafterweise in einem gewünschten Abstand vom Gehäuse des Getriebes plaziert werden. Zum Beispiel kann die Betätigungswelle auch durch eine Motorradverkleidung hindurch geführt werden, was die Bedienung des Betätigungsorgans vereinfacht.

Bei einer bevorzugten Ausführung der Erfindung sind die Betätigungswelle und die Welle der Wähleinrichtung miteinander über mindestens ein Gummielement verbunden. Dies erhöht vorteilhafterweise die Toleranzunempfindlichkeit der Steckverbindung und dämpft die Übertragung von Schwingungen.

Ein bevorzugtes Ausführungsbeispiel der Erfindung ist in der nachfolgenden Beschreibung und der zugehörigen Zeichnung näher dargestellt. Es zeigen:
- Figur 1: eine perspektivische Ansicht eines Gehäuses eines Getriebes mit einer erfindungsgemäßen Wähleinrichtung für eine Rückwärtsfahreinrichtung,
- Figur 2: die Wähleinrichtung für eine Rückwärtsfahreinrichtung in vergrößerter Darstellung aus einer anderen Projektionsrichtung.

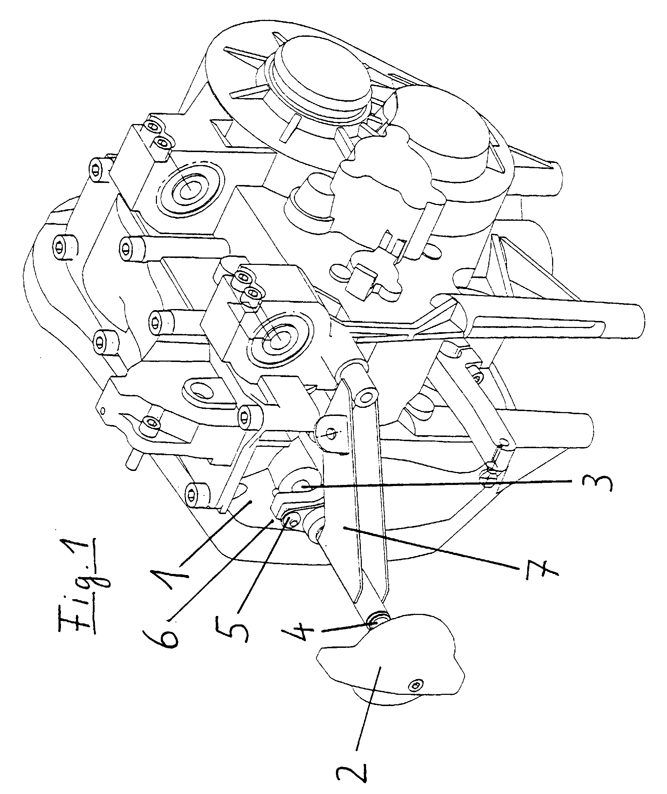

Nach Figur 1 ist an einem Gehäuse 1 für ein Getriebe eines nicht gezeichneten Motorrads mit einer Antriebseinrichtung, mindestens bestehend aus einem Verbrennungsmotor und dem von diesem angetriebenen Getriebe mit mehreren Schaltstufen für Vorwärtsfahrt, ein Betätigungsorgan, als Handhebel 2 ausgebildet, angebracht. Der Handhebel 2 dient dazu, eine Wähleinrichtung am Motorrad durch einen Fahrer manuell zu steuern, die entweder die Antriebseinrichtung oder eine Rückwärtsfahreinrichtung mit einer Kraftübertragungseinrichtung verbindet. Die Kraftübertragungseinrichtung überträgt die Antriebskraft vom Getriebe auf ein Hinterrad. Die Rückwärtsfahreinrichtung verwendet als Antriebsmotor einen Elektromotor, der für Rückwärtsfahrt die Kraftübertragungseinrichtung antreibt und im normalen Betrieb als Startermotor für den Verbrennungsmotor eingesetzt wird.

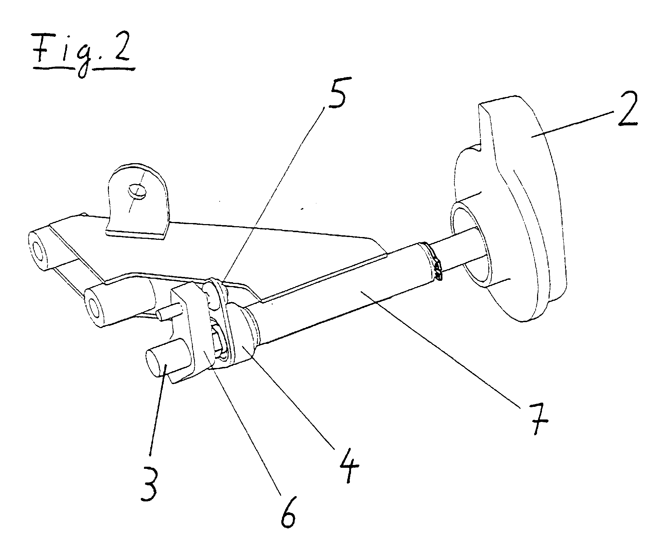

Eine im Gehäuse 1 des Getriebes drehbar gelagerte Welle 3 der Wähleinrichtung ist, wie Figur 2 zeigt, aus dem Gehäuse 1 heraus geführt und mit einer Betätigungswelle 4 über ein Gummielement 5 drehfest verbunden. Zur Drehmomentübertragung sind die Welle 3 und die Betätigungswelle 4 durch eine exzentrische Steckverbindung 6 miteinander verbunden.

Der Handhebel 2 ist fest am anderen Ende der Betätigungswelle 4 angebracht, die in einem Haltebock 7 drehbar gelagert ist und der wiederum mit dem Gehäuse 1 des Getriebes durch nicht gezeichnete Schrauben fest verbunden ist.

## Patentansprüche

1. Motorrad mit einer Antriebseinrichtung, mindestens bestehend aus einem Verbrennungsmotor und einem von diesem angetriebenen Getriebe mit mehreren Schaltstufen, mit einer Starteinrichtung für den Verbrennungsmotor, mindestens bestehend aus einem Elektromotor als Startermotor, mit einer Kraftübertragungseinrichtung, die die Antriebskraft vom Getriebe auf ein Hinterrad überträgt, mit einer Rückwärtsfahreinrichtung, die als Antriebsmotor den Elektromotor verwendet, der für Rückwärtsfahrt die Kraftübertragungseinrichtung antreibt, wobei eine über ein Betätigungsorgan manuell durch einen Fahrer betätigbare Wähleinrichtung am Motorrad vorhanden ist, die entweder die Antriebseinrichtung oder die Rückwärtsfahreinrichtung mit der Kraftübertragungseinrichtung verbindet, dadurch gekennzeichnet, daß das Betätigungsorgan an einem Gehäuse (1) für das Getriebe angebracht ist.

2. Motorrad nach Anspruch 1, dadurch gekennzeichnet, daß das Betätigungsorgan am Ende einer im Gehäuse (1) des Getriebes drehbar gelagerten Welle (3) der Wähleinrichtung angebracht ist.

3. Motorrad nach Anspruch 1, dadurch gekennzeichnet, daß das Betätigungsorgan am Ende einer Betätigungswelle (4) angebracht ist, die in einem Haltebock (7) drehbar gelagert ist, der mit dem Gehäuse (1) des Getriebes fest verbunden ist und daß die Betätigungswelle (4) von der Welle (3) der Wähleinrichtung abnehmbar, außerhalb des Gehäuses (1) des Getriebes mit dieser drehfest verbunden ist.

4. Motorrad nach Anspruch 3, dadurch gekennzeichnet, daß die Betätigungswelle (4) und die Welle (3) der Wähleinrichtung miteinander über mindestens ein Gummielement (5) verbunden sind.

## Claims

1. A motorcycle comprising a drive device comprising at least of an internal combustion engine, a gear unit driven by it and with a number of gears, a starting device for the engine at least comprising an electric starter motor, a power-transmitting device which transmits the driving force from the gear unit to a rear wheel, and a reversing device which is driven by the electric motor which drives the power-transmitting device during reversing, wherein a selector device manually actuated by the driver via an actuating means is provided on the motorcycle and connects either the drive device or the reversing device to the power-transmitting device, characterised in that the actuating means is mounted on a casing (1) for the gear unit.

2. A motorcycle according to claim 1, characterised in that the actuating means is disposed on the end of a shaft (3) of the selector device, mounted for rotation in the casing (1) of the gear unit.

3. A motorcycle according to claim 1, characterised in that the actuating means is disposed on the end of an actuating shaft (4) mounted for rotation in a retaining frame (7) firmly connected to the casing (1) of the gear unit, and the actuating shaft (4) is removable from the shaft (3) of the selector device and is non-rotatably connected thereto outside the casing (1) of the gear unit.

4. A motorcycle according to claim 3, characterised in that the actuating shaft (4) and the shaft (3) of the selector device are interconnected by at least one rubber element (5).

## Revendications

1. Motocyclette comportant :
• un ensemble moteur, composé d'au moins un moteur à combustion interne entraînant une boîte de vitesses à plusieurs rapports,
• un dispositif de démarrage du moteur, comprenant au moins un moteur électrique utilisé comme démarreur,
• un dispositif de transmission de force, faisant passer la force motrice de la boîte de vitesses à la roue arrière,
• un dispositif de marche en arrière, utilisant alors le moteur électrique pour entraîner le dispositif de transmission de force,
• un sélecteur que peut actionner manuellement le conducteur par l'intermédiaire d'un organe d'actionnement et qui, au choix, met en liaison avec le dispositif de transmission de force, soit l'ensemble moteur, soit le dispositif de marche en arrière,
caractérisée en ce que
l'organe d'actionnement est monté sur le boîtier (1) de la boîte de vitesses.

2. Motocyclette selon la revendication 1,
caractérisée en ce que
l'organe d'actionnement est monté à l'extrémité d'un arbre (3) appartenant au sélecteur et monté tournant dans le boîtier (1) de la boîte de vitesses.

3. Motocyclette selon la revendication 1,
caractérisée en ce que
l'organe d'actionnement est monté à l'extrémité d'un arbre de manoeuvre (4) pouvant tourner dans une console de maintien (7) solidaire du boîtier (1) de la boîte de vitesses, et cet arbre (4) peut être dégagé de l'arbre (3) du sélecteur, en étant solidaire en rotation de cet arbre à l'extérieur du boîtier (1) de la boîte de vitesses.

4. Motocyclette selon la revendication 3,
caractérisée en ce que
l'arbre de manoeuvre (4) et l'arbre (3) du sélecteur sont reliés par au moins un élément en caoutchouc (5).
